# DEMANDE DE BREVET EUROPEEN

(11) **EP 2 717 160 A1**
(43) Date de publication de la demande: **09.04.2014**
(21) Numéro de dépôt: 13186757.4
(22) Date de dépôt: 30.09.2013
(51) Int. Cl.: G06F 9/48, G06F 9/50

(54) **Equipement fournisseur de services effectuant des traitements sur réception de requêtes, et procédé correspondant**

(30) Priorité: 05.10.2012 FR 1259461
(71) Demandeur: SAGEMCOM DOCUMENTS SAS, 92500 Rueil Malmaison (FR)
(72) Inventeur: Ferreri, Jean-Thomas, 92500 Rueil Malmaison (FR)
(74) Mandataire: Maillet, Alain

(57) **Abrégé**

Un équipement fournisseur de services reçoit des requêtes de traitement, et effectue des traitements en conséquence. L'équipement attribue un niveau de priorité à chaque requête reçue. L'équipement sélectionne une requête parmi un ensemble de requêtes en attente de traitement, en fonction au moins des niveaux de priorité attribués aux requêtes en attente de traitement. L'équipement détecte (501) des échanges de messages relatifs à un contexte de service dans lequel le résultat d'un traitement relatif à au moins une requête en attente de traitement est potentiellement requis, puis modifie (504) de manière relative les niveaux de priorité attribués auxdites requêtes en attente de traitement, en fonction des échanges de messages détectés.

## Description

La présente invention concerne un équipement fournisseur de services, qui est adapté pour recevoir des requêtes de traitement et pour effectuer des traitements respectifs sur réception desdites requêtes afin d'obtenir des résultats respectifs.

Des fournisseurs de services mettent en oeuvre des équipements permettant d'effectuer sur requêtes des traitements relatifs à ces services. De telles requêtes sont émises par des dispositifs au travers d'un réseau de communication, tel que l'Internet, via lequel ces équipements sont rendus accessibles.

Un premier exemple de tels services concerne une dématérialisation de documents. Un utilisateur scanne un document papier à l'aide d'un dispositif de numérisation et instruit le dispositif de numérisation de transmettre le document numérisé à un équipement mettant en oeuvre un service de stockage de documents numérisés. Outre le stockage du document numérisé, la requête émise par le dispositif de numérisation peut indiquer, explicitement ou implicitement, à l'équipement d'appliquer un traitement d'image sur le document numérisé. Un tel traitement consiste par exemple à appliquer un filtre d'amélioration de contraste, un algorithme de reconnaissance de caractères, un algorithme de tatouage numérique (« watermarking » en anglais), etc. Le même service pourrait être offert dans le cas où l'utilisateur fournit un document numérisé audit équipement, grâce à un ordinateur personnel PC (« Personal Computer » en anglais).

Un second exemple de tels services concerne une mise en place d'albums photos numériques. L'utilisateur prend une photo grâce à un appareil photo numérique ou un téléphone intelligent (« smartphone » en anglais) et instruit l'appareil photo numérique ou le téléphone intelligent de transmettre la photo à un équipement mettant en oeuvre un service d'archivage de photos. Outre l'archivage de la photo, la requête émise par l'appareil photo numérique ou le téléphone intelligent peut indiquer, explicitement ou implicitement, à l'équipement d'appliquer un traitement d'image sur la photo. Un tel traitement consiste par exemple à appliquer un filtre, un algorithme de correction d'yeux rouges, un algorithme de reformatage des données, etc. Le même service pourrait être offert dans le cas où l'utilisateur fournit une photo numérisée audit équipement, grâce à un dispositif de numérisation.

D'autres types de services ou traitements peuvent être ainsi mis en oeuvre. Notamment, il n'est pas nécessaire qu'un document, photo ou autre élément sur lequel le traitement est à effectuer, soit fourni avec la requête. La requête peut en effet concerner un élément déjà disponible auprès de l'équipement, généré à la volée par l'équipement, obtenu par l'équipement auprès d'un dispositif tiers, etc. De tels traitements sont par exemple une édition de facture ou de bilan de consommation pour le service offert à l'utilisateur, l'application d'un tatouage numérique à un ensemble de photos de l'utilisateur déjà stockées par l'équipement, etc.

Certaines requêtes peuvent nécessiter que l'équipement fournisse au plus tôt le résultat du traitement, l'utilisateur étant en attente de ce résultat pour poursuivre ses activités.

Ces services sont typiquement offerts à une multitude d'utilisateurs, chacun disposant d'un compte utilisateur qui lui est propre. L'équipement mettant en oeuvre le service reçoit donc des requêtes concurrentes de plusieurs utilisateurs, stockent ces requêtes dans une file d'attente et effectue les traitements selon un ordre dans lequel les requêtes ont été reçues, i. e. selon un mode FIFO (« First-In First-Out » en anglais). Cette manière de procéder pose le problème des temps de latence de traitement pour des utilisateurs en attente du résultat du traitement.

De plus, lorsque ces services sont mis en oeuvre par un système en nuage (« cloud » en anglais), des pics de création d'instances de serveurs peuvent apparaître, afin de paralléliser les traitements à effectuer. Cela résulte en une sur-utilisation de ressources de traitement, alors qu'une partie seulement des requêtes reçues par l'équipement nécessite de fournir un résultat au plus tôt.

Il est donc souhaitable de pallier ces inconvénients de l'état de la technique, et notamment d'améliorer la gestion de ressources utilisées par l'équipement pour effectuer le traitement requis.

L'invention concerne un équipement fournisseur de services, ledit équipement comportant des moyens pour recevoir des requêtes de traitement et des moyens pour effectuer des traitements respectifs sur réception desdites requêtes afin d'obtenir des résultats respectifs. L'équipement est tel qu'il comporte des moyens pour attribuer un niveau de priorité à chaque requête reçue ; des moyens pour sélectionner une requête parmi un ensemble de requêtes en attente de traitement, en fonction au moins des niveaux de priorité attribués auxdites requêtes en attente de traitement ; des moyens pour détecter des échanges de messages relatifs à un contexte de service dans lequel le résultat d'un traitement relatif à au moins une requête en attente de traitement est potentiellement requis ; des moyens pour modifier de manière relative les niveaux de priorité attribués auxdites requêtes en attente de traitement, en fonction des échanges de messages détectés.

Ainsi, par gestion de ces niveaux de priorité, la gestion de ressources utilisées par l'équipement pour effectuer les traitements requis est améliorée. Lorsque l'équipement est un système de nuage, le nombre d'instances de serveurs créées en parallèle peut être maîtrisé.

Selon un mode de réalisation particulier, lesdits moyens pour modifier les niveaux de priorité sont adaptés pour modifier uniquement le niveau de priorité de chaque requête en attente de traitement relative à un dit traitement potentiellement requis.

Selon un mode de réalisation particulier, lesdits moyens pour sélectionner une requête sont adaptés pour sélectionner une requête parmi l'ensemble de requêtes en attente de traitement, en fonction en outre d'un ordre de réception par ledit équipement desdites requêtes en attente.

Selon un mode de réalisation particulier, lesdits moyens pour détecter des échanges de messages comportent des moyens pour détecter une activité dans un compte utilisateur d'un service web mis en oeuvre par ledit équipement et via lequel des résultats de traitements sont potentiellement requis, et lesdits moyens pour modifier les niveaux de priorité sont adaptés pour modifier lesdits niveaux de priorité en fonction de l'activité détectée.

Selon un mode de réalisation particulier, lesdits moyens pour modifier les niveaux de priorité sont adaptés pour augmenter le niveau de priorité d'au moins une requête en attente de traitement et associée audit compte utilisateur, lorsque ledit équipement détecte une connexion au compte utilisateur.

Selon un mode de réalisation particulier, lesdits moyens pour modifier les niveaux de priorité sont adaptés pour diminuer le niveau de priorité d'au moins une requête en attente de traitement et associée audit compte utilisateur, lorsque ledit équipement détecte une déconnexion du compte utilisateur.

Selon un mode de réalisation particulier, lesdites requêtes étant d'un premier type ou d'un second type, lesdits moyens pour attribuer un niveau de priorité sont adaptés pour attribuer un niveau de priorité en fonction du type de la requête reçue.

Selon un mode de réalisation particulier, contrairement aux requêtes du second type, des dispositifs émetteurs de requêtes du premier type se mettant en attente du résultat du traitement de ladite requête, lesdits moyens pour attribuer un niveau de priorité sont adaptés pour attribuer un niveau de priorité plus élevé aux requêtes du premier type qu'aux requêtes du second type.

Selon un mode de réalisation particulier, l'équipement est un système en nuage.

L'invention concerne également un procédé mis en oeuvre par un équipement fournisseur de services, ledit procédé comportant les étapes suivantes : recevoir des requêtes de traitement ; effectuer des traitements respectifs sur réception desdites requêtes afin d'obtenir des résultats respectifs. Le procédé est tel qu'il comporte en outre les étapes suivantes : attribuer un niveau de priorité à chaque requête reçue ; sélectionner une requête parmi un ensemble de requêtes en attente de traitement, en fonction au moins des niveaux de priorité attribués auxdites requêtes en attente de traitement ; détecter des échanges de messages relatifs à un contexte de service dans lequel le résultat d'un traitement relatif à au moins une requête en attente de traitement est potentiellement requis ; modifier de manière relative les niveaux de priorité attribués auxdites requêtes en attente de traitement, en fonction des échanges de messages détectés.

L'invention concerne également un programme d'ordinateur, qui peut être stocké sur un support et/ou téléchargé d'un réseau de communication, afin d'être lu par un processeur. Ce programme d'ordinateur comprend des instructions pour implémenter le procédé mentionné ci-dessus, lorsque ledit programme est exécuté par le processeur. L'invention concerne également des moyens de stockage comprenant un tel programme d'ordinateur.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
- la Fig. 1 illustre schématiquement un système dans lequel l'invention peut être mise en oeuvre ;
- la Fig. 2 illustre schématiquement un exemple d'architecture matérielle d'un équipement du système de la Fig. 1 ;
- la Fig. 3 illustre schématiquement un algorithme de réception de requêtes, mis en oeuvre par ledit équipement ;
- la Fig. 4 illustre schématiquement un algorithme de traitement de requêtes en attente, mis en oeuvre par ledit équipement ;
- la Fig. 5 illustre schématiquement un algorithme d'ajustement de priorité de traitement de requêtes en attente, mis en oeuvre par ledit équipement.

Afin de permettre d'améliorer la gestion de ressources utilisées par un équipement fournisseur de services, il est proposé d'attribuer des niveaux de priorité aux requêtes de traitement reçues par l'équipement fournisseur de services, et de réévaluer les niveaux de priorité attribués en fonction d'une détection d'échanges de messages relatifs à un contexte de service dans lequel le résultat d'un traitement relatif à au moins une requête en attente de traitement est potentiellement requis. Cela permet de traiter en priorité les requêtes dont le résultat est susceptible d'être attendu au plus tôt. Par exemple, lorsque le traitement s'inscrit dans un service de dématérialisation de documents comme déjà mentionné, lorsqu'un utilisateur accède à un compte utilisateur qui lui est associé, des échanges de messages se mettent en place entre le dispositif utilisé par l'utilisateur pour se connecter au compte utilisateur et l'équipement fournisseur de services. Ces messages sont représentatifs d'un contexte de service de dématérialisation de documents dans lequel le résultat d'un traitement précédemment requis par l'utilisateur est potentiellement attendu. Les niveaux de priorité des requêtes en attente pour cet utilisateur peuvent ainsi être augmentés de manière à permettre que les résultats des traitements soient disponibles au moment où l'utilisateur souhaite y accéder.

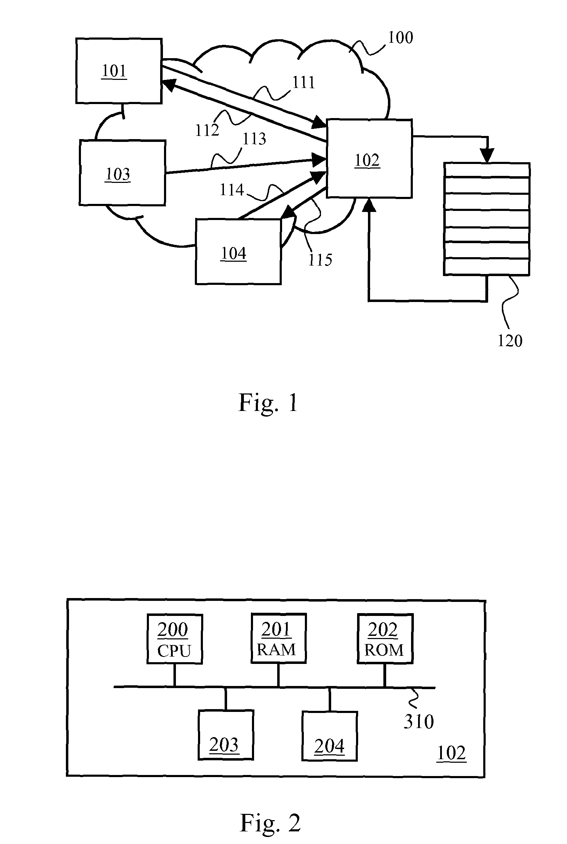

La Fig. 1 illustre schématiquement un système dans lequel l'invention peut être mise en oeuvre. Le système de la Fig. 1 comporte un équipement 102 fournisseur de services et adapté pour recevoir des requêtes via un réseau de communication 100, tel que l'Internet. Ces requêtes visent à ce que l'équipement 102 effectue des traitements respectifs et fournisse des résultats consécutivement à ces requêtes.

Le terme « équipement » signifie que les fonctions décrites ici en relation avec l'équipement 102 peuvent être mises en oeuvre grâce à une unique plateforme matérielle, ou à plusieurs plateformes matérielles coordonnées, comme c'est le cas par exemple d'un système en nuage.

Sur la Fig. 1, un premier échange est représenté entre un premier dispositif 101 et l'équipement 102 via le réseau 100. Un second échange est représenté, comprenant une première phase entre un second dispositif 102 et l'équipement 102 via le réseau 100 et une seconde phase entre l'équipement 102 et un troisième dispositif 103.

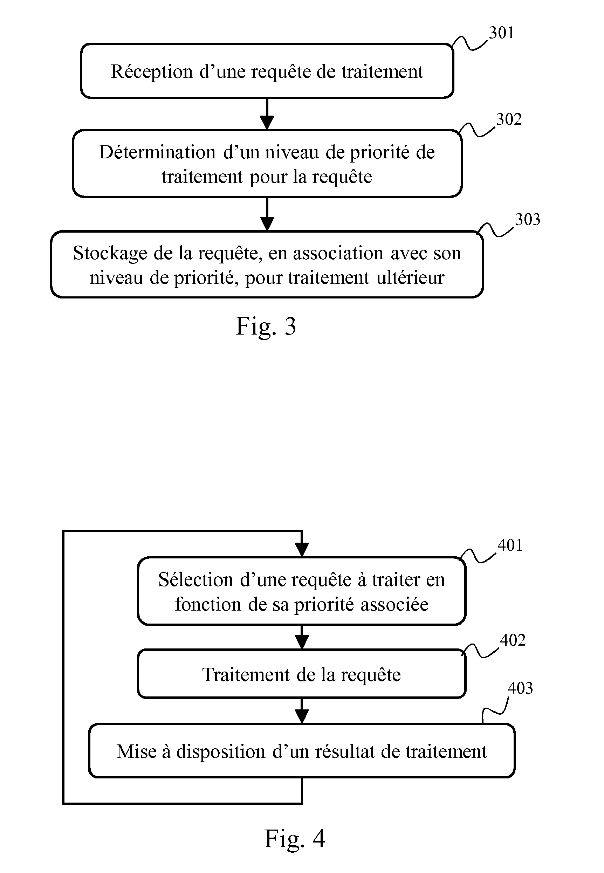

Dans le cadre du premier échange, une requête 111 est envoyée par le premier dispositif 101 à l'équipement 102 via le réseau 100. L'équipement 102 place alors la requête dans une file d'attente 120 pour traitement ultérieur, tel que décrit ci-après en relation avec les Figs. 3 et 4. Lorsque le résultat de ce traitement est disponible, l'équipement 102 transmet via le réseau 100 ce résultat 112 au premier dispositif 101, qui s'était mis en attente de réception de ce résultat.

Dans le cadre du second échange, une requête 113 est envoyée par le second dispositif 103 à l'équipement 102 via le réseau 100. L'équipement 102 place alors la requête dans la file d'attente 120 pour traitement ultérieur, tel que décrit ci-après en relation avec les Figs. 3 et 4. Contrairement au premier échange, le second dispositif 103 ne se met pas en attente du résultat du traitement de cette requête. Il peut cependant se mettre en attente d'un acquittement de bonne réception de la requête. Ultérieurement le troisième dispositif 104 accède à un service web fourni par l'équipement 102, afin d'obtenir le résultat du traitement. Cette opération est symbolisée par la flèche 114 sur la Fig. 1. Lorsque le résultat du traitement est disponible, l'équipement 102 transmet via le réseau 100 ce résultat 112 au troisième dispositif 104. Le même scénario pourrait être appliqué en confondant les second 103 et troisième 104 dispositifs.

Il apparaît donc que l'équipement 102 peut être amené à traiter deux types de requêtes : un premier type pour lequel le dispositif ayant émis la requête se met en attente du résultat du traitement et un second type pour lequel le dispositif ayant émis la requête ne se met pas en attente du résultat du traitement, l'accès au résultat du traitement se faisant alors ultérieurement. Dans un mode de réalisation particulier, l'équipement 102 traite uniquement des requêtes du second type.

La Fig. 2 illustre schématiquement un exemple d'architecture matérielle de l'équipement 102, qui comporte alors, reliés par un bus de communication 210 : un processeur ou CPU (« Central Processing Unit » en anglais) 200 ; une mémoire vive RAM (« Random Access Memory » en anglais) 201 ; une mémoire morte ROM (« Read Only Memory » en anglais) 202 ; une unité de stockage ou un lecteur de support de stockage, tel qu'un disque dur HDD (« Hard Disk Drive » en anglais) 203 ; une interface 204 permettant de communiquer via le réseau 100.

Le processeur 200 est capable d'exécuter des instructions chargées dans la RAM 201 à partir de la ROM 202, d'une mémoire externe (non représentée), d'un support de stockage, tel que le disque dur HDD 203, ou du réseau 100. Lorsque l'équipement 102 est mis sous tension, le processeur 200 est capable de lire de la RAM 201 des instructions et de les exécuter. Ces instructions forment un programme d'ordinateur causant la mise en oeuvre, par le processeur 200, de tout ou partie des algorithmes et étapes décrits ci-après. Tout ou partie des algorithmes et étapes décrits ci-après peut être implémenté sous forme logicielle par exécution d'un ensemble d'instructions par une machine programmable, tel qu'un DSP (« Digital Signal Processor » en anglais) ou un microcontrôleur, ou être implémenté sous forme matérielle par une machine ou un composant dédié, tel qu'un FPGA (« Field-Programmable Gate Array » en anglais) ou un ASIC (« Application-Specific Integrated Circuit » en anglais).

La Fig. 3 illustre schématiquement un algorithme de réception de requêtes, mis en oeuvre par l'équipement 102. L'algorithme est mis en oeuvre pour chaque requête de traitement reçue par l'équipement 102.

Dans une étape 301, l'équipement 102 reçoit une requête de traitement, telle que la requête 111 ou la requête 113.

Dans une étape 302 suivante, l'équipement 102 détermine un niveau de priorité pour la requête reçue. L'équipement 102 sélectionne un niveau de priorité parmi un ensemble ordonné de niveaux de priorité, en fonction du type de la requête reçue.

Une requête du premier type a un niveau de priorité plus élevé qu'une requête du second type. Selon un exemple illustratif, il existe quatre niveaux de priorité : 0 (bas), 1 (moyen), 2 (haut) et 3 (urgent). Par défaut, l'équipement 102 attribue un niveau de priorité 3 à chaque requête du premier type et un niveau de priorité 0 à chaque requête de second type.

L'équipement 102 peut distinguer une requête de premier type d'une requête de second type grâce à une information de type de requête contenue dans la requête, ou grâce au traitement à effectuer si les requêtes concernent des traitements différents. L'équipement 102 peut aussi faire cette distinction grâce à un identifiant du dispositif ayant émis la requête, les dispositifs émettant des requêtes du second type ayant un identifiant ou une portion d'identifiant prédéfini(e) indiquant que le dispositif génère des requêtes du second type. L'équipement 102 peut aussi faire cette distinction grâce à un identifiant de service web, mis en oeuvre par l'équipement 102 et via lequel la requête est reçue, chaque service web implémenté par l'équipement 102 étant destiné à recevoir uniquement des requêtes de l'un des deux types.

Dans le cas où l'équipement 102 gère uniquement des requêtes du second type, l'équipement 102 attribue le niveau de priorité le plus bas à chaque requête de second type.

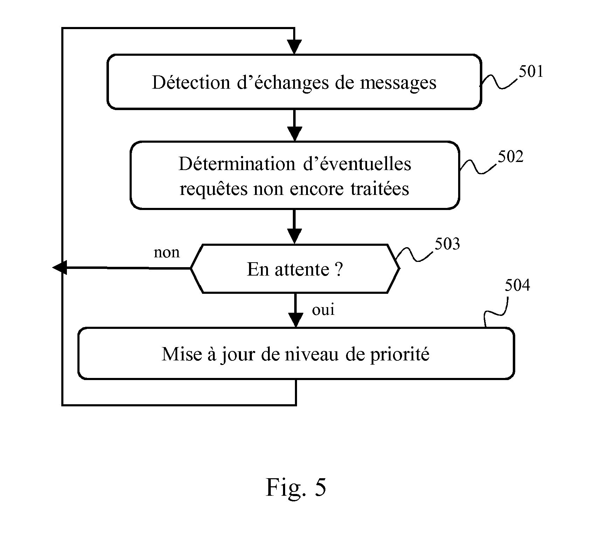

Le niveau de priorité attribué à une requête du second type est susceptible d'évoluer pendant le laps de temps durant lequel la requête est présente dans la file d'attente 120, tel que décrit ci-après en relation avec la Fig. 5.

Il convient aussi de noter que la requête peut être associée à un identifiant représentatif d'un compte utilisateur. Soit cet identifiant est contenu dans la requête, soit la requête fait suite à un échange de messages visant à ouvrir une session, vis-à-vis du service fourni par l'équipement 102, correspondant à ce compte utilisateur.

Dans une étape 303 suivante, l'équipement 102 stocke la requête reçue dans la file d'attente 120, en association avec le niveau de priorité attribué par l'équipement 102. Dans un mode de réalisation particulier, l'équipement 102 stocke la requête en outre en association avec une information représentative d'un instant auquel ladite requête a été reçue par l'équipement 102. Dans un autre mode de réalisation particulier, l'équipement 102 stocke dans la file d'attente 120 les requêtes reçues de manière à permettre d'identifier un ordre de réception desdites requêtes. Ces deux modes de réalisation particuliers permettent de traiter en premier, parmi plusieurs requêtes de même niveau de priorité, celle qui a été reçue avant les autres. L'équipement 102 peut aussi stocker la requête en outre en association avec une information représentative du type de la requête.

La Fig. 4 illustre schématiquement un algorithme de traitement de requêtes en attente, mis en oeuvre par l'équipement 102. Cet algorithme est adapté pour être exécuté en parallèle de celui de la Fig. 3.

Dans une étape 401, l'équipement 102 sélectionne une requête à traiter, en fonction du niveau de priorité associé aux requêtes en attente dans la file d'attente 120. L'équipement 102 commence par traiter la requête ayant le niveau de priorité le plus élevé parmi les requêtes en attente, ou une requête parmi celles ayant le niveau de priorité le plus élevé parmi les requêtes en attente. Lorsque plusieurs requêtes sont de niveau le plus élevé parmi les requêtes en attente, l'équipement 102 peut arbitrairement en sélectionner une parmi celles-ci. Si l'équipement 102 est capable d'identifier un ordre de réception desdites requêtes, l'équipement 102 peut commencer par traiter la requête reçue en premier parmi celles ayant le niveau de priorité le plus élevé parmi les requêtes en attente.

Dans une étape 402 suivante, l'équipement 102 effectue le traitement correspondant à la requête sélectionnée.

Dans une étape 403 suivante, l'équipement 102 met à disposition le résultat du traitement effectué au cours de l'étape 402. La requête traitée est retirée de la file d'attente 120. Si la requête traitée est du premier type, l'équipement 102 transmet le résultat au dispositif ayant émis la requête. Si la requête traitée est du second type, l'équipement 102 stocke le résultat dans une mémoire transitoire, jusqu'à ce qu'un dispositif requiert d'obtenir ce résultat. L'étape 401 est ensuite réitérée.

La Fig. 5 illustre schématiquement un algorithme d'ajustement de priorité de traitement de requêtes en attente, mis en oeuvre par l'équipement 102. Cet algorithme est adapté pour être exécuté en parallèle de ceux des Figs. 3 et 4.

Dans une étape 501, l'équipement 102 détecte des échanges de messages relatifs à un contexte de service dans lequel le résultat d'au moins un traitement est potentiellement requis.

Dans une étape 502 suivante, l'équipement 102 détermine si la file d'attente 120 contient au moins une requête relative à ce(s) traitement(s) potentiellement requis.

Dans une étape 503 suivante, l'équipement 102 vérifie si la file d'attente 120 contient au moins une telle requête. Si tel est le cas, une étape 504 est effectuée ; sinon l'étape 501 est réitérée.

Dans l'étape 504, l'équipement 102 modifie le niveau de priorité attribué à ladite ou auxdites requête(s) en attente de traitement, en fonction des échanges de messages détectés. L'étape 501 est ensuite réitérée.

Reprenons l'exemple illustratif déjà utilisé, et considérons que l'équipement 102 met en oeuvre un serveur web auquel l'utilisateur peut accéder via un compte utilisateur qui lui est propre. Chaque requête en attente de traitement est alors associée à un identifiant représentatif du compte utilisateur auquel cette requête est associée.

Lorsque l'équipement 102 détecte des messages relatifs à une connexion au compte utilisateur, l'équipement 102 modifie chaque requête, présente dans la file d'attente 120 pour ce compte utilisateur et qui est de niveau de priorité inférieur à 1, en passant son niveau de priorité à 1. En effet, l'équipement 102 a détecté des échanges de messages relatifs à un contexte de service dans lequel le résultat d'au moins un traitement est potentiellement requis, puisque le fait que l'utilisateur accède à son compte utilisateur signifie que l'utilisateur va potentiellement chercher à visualiser le résultat des traitements précédemment requis. Par exemple, l'utilisateur se connecte à son compte utilisateur pour visualiser les documents numérisés qui ont été stockés et traités par l'équipement 102 dans un contexte de service de dématérialisation de documents.

Dans un mode de réalisation, tous les niveaux de priorités de requêtes en attente de traitement et associées à un compte utilisateur sont incrémentés d'une unité, si possible, sur détection d'une connexion à ce compte utilisateur.

Une fois la connexion établie et lorsque l'activité pour ce compte utilisateur est supérieure à un seuil donné, l'équipement 102 modifie chaque requête, présente dans la file d'attente 120 pour ce compte utilisateur et qui est de niveau de priorité inférieur à 2, en passant son niveau de priorité à 2.

Lorsque l'utilisateur accède à une page de consultation de résultats d'un traitement précédemment requis, l'équipement 102 modifie chaque requête, présente dans la file d'attente 120 pour ce compte utilisateur et qui est de niveau de priorité inférieur à 3, en passant son niveau de priorité à 3.

Lorsque l'équipement 102 est un système de nuage, il est ainsi possible de n'augmenter le nombre d'instances actives en parallèle que pour traiter simultanément les requêtes dont le niveau de priorité est supérieur à un seuil donné. Sinon, le nombre d'instances actives en parallèle est inférieur ou égal à une valeur par défaut.

Lorsqu'une déconnexion du compte utilisateur est opérée, l'équipement 102 modifie chaque requête, présente dans la file d'attente 120 pour ce compte utilisateur et qui est de niveau de priorité supérieur à 0, en passant son niveau de priorité à 0. En effet, une fois l'utilisateur déconnecté, ces traitements peuvent attendre par rapport à d'autres requêtes éventuellement en attente de traitement.

En d'autres termes, l'équipement 102 détecte une activité sur le compte utilisateur et modifie le niveau de priorité attribué à ladite ou auxdites requête(s) en attente de traitement, en fonction de l'activité détectée sur le compte utilisateur. L'activité peut être mesurée d'après un nombre de messages envoyés à l'équipement 102 dans le cadre de la connexion établie pour ce compte utilisateur et/ou en fonction d'une progression d'une navigation au sein de pages web fournies par le service web et/ou en fonction d'un laps de temps écoulé entre deux actions utilisateur auprès du service web.

Il convient de noter que le niveau de priorité d'une requête associée à un compte utilisateur peut être modifié sans que le niveau de priorité d'une autre requête associée à ce compte utilisateur soit modifié.

Dans un mode de réalisation, plutôt que de modifier le niveau de priorité de requêtes présentes dans la file d'attente 120 pour ce compte utilisateur, l'équipement 102 peut modifier en sens inverse les niveaux de priorité des autres requêtes en attente de traitement. C'est la différence relative de niveaux de priorité entre les requêtes en attente de traitement qui importe.

## Revendications

1. Equipement (102) fournisseur de services, ledit équipement comportant des moyens pour recevoir (301) des requêtes de traitement et des moyens pour effectuer des traitements (402) respectifs sur réception desdites requêtes afin d'obtenir des résultats respectifs, **caractérisé en ce qu'il** comporte des moyens pour attribuer (302) un niveau de priorité à chaque requête reçue, et **en ce qu'**il comporte en outre :
- des moyens pour sélectionner (401) une requête parmi un ensemble de requêtes en attente de traitement, en fonction au moins des niveaux de priorité attribués auxdites requêtes en attente de traitement ;
- des moyens pour détecter (501) des échanges de messages relatifs à un contexte de service dans lequel le résultat d'un traitement relatif à au moins une requête en attente de traitement est potentiellement requis ;
- des moyens pour modifier (504) de manière relative les niveaux de priorité attribués auxdites requêtes en attente de traitement, en fonction des échanges de messages détectés.

2. Equipement fournisseur de services selon la revendication 1, **caractérisé en ce que** lesdits moyens pour modifier les niveaux de priorité sont adaptés pour modifier uniquement le niveau de priorité de chaque requête en attente de traitement relative à un dit traitement potentiellement requis.

3. Equipement fournisseur de services selon l'une quelconque des revendications 1 et 2, **caractérisé en ce que** lesdits moyens pour sélectionner une requête sont adaptés pour sélectionner une requête parmi l'ensemble de requêtes en attente de traitement, en fonction en outre d'un ordre de réception par ledit équipement desdites requêtes en attente.

4. Equipement fournisseur de services selon l'une quelconque des revendications 1 à 3, **caractérisé en ce que** lesdits moyens pour détecter des échanges de messages comportent des moyens pour détecter une activité dans un compte utilisateur d'un service web mis en oeuvre par ledit équipement et via lequel des résultats de traitements sont potentiellement requis, et **en ce que** lesdits moyens pour modifier les niveaux de priorité sont adaptés pour modifier lesdits niveaux de priorité en fonction de l'activité détectée.

5. Equipement fournisseur de services selon la revendication 4, **caractérisé en ce que** lesdits moyens pour modifier les niveaux de priorité sont adaptés pour augmenter le niveau de priorité d'au moins une requête en attente de traitement et associée audit compte utilisateur, lorsque ledit équipement détecte une connexion au compte utilisateur.

6. Equipement fournisseur de services selon l'une quelconque des revendications 4 et 5, **caractérisé en ce que** lesdits moyens pour modifier les niveaux de priorité sont adaptés pour diminuer le niveau de priorité d'au moins une requête en attente de traitement et associée audit compte utilisateur, lorsque ledit équipement détecte une déconnexion du compte utilisateur.

7. Equipement fournisseur de services selon l'une quelconque des revendications 1 à 6, **caractérisé en ce que**, lesdites requêtes étant d'un premier type ou d'un second type, lesdits moyens pour attribuer un niveau de priorité sont adaptés pour attribuer un niveau de priorité en fonction du type de la requête reçue.

8. Equipement fournisseur de services selon la revendication 7, **caractérisé en ce que**, contrairement aux requêtes du second type, des dispositifs émetteurs de requêtes du premier type se mettant en attente du résultat du traitement de ladite requête, lesdits moyens pour attribuer un niveau de priorité sont adaptés pour attribuer un niveau de priorité plus élevé aux requêtes du premier type qu'aux requêtes du second type.

9. Equipement fournisseur de services selon l'une quelconque des revendications 1 à 8, **caractérisé en ce que** ledit équipement est un système en nuage.

10. Procédé mis en oeuvre par un équipement fournisseur de services (102), ledit procédé comportant les étapes suivantes :
- recevoir (301) des requêtes de traitement ;
- effectuer des traitements (402) respectifs sur réception desdites requêtes afin d'obtenir des résultats respectifs,
**caractérisé en ce qu'il** comporte en outre les étapes suivantes :
- attribuer (302) un niveau de priorité à chaque requête reçue ;
- sélectionner (401) une requête parmi un ensemble de requêtes en attente de traitement, en fonction au moins des niveaux de priorité attribués auxdites requêtes en attente de traitement ;
- détecter (501) des échanges de messages relatifs à un contexte de service dans lequel le résultat d'un traitement relatif à au moins une requête en attente de traitement est potentiellement requis ;
- modifier (504) de manière relative les niveaux de priorité attribués auxdites requêtes en attente de traitement, en fonction des échanges de messages détectés.
